# EUROPEAN PATENT APPLICATION

(11) **EP 4 432 143 A1**
(43) Date of publication of application: **18.09.2024**
(21) Application number: 22925115.2
(22) Date of filing: 12.12.2022
(51) Int. Cl.: G06F 21/35, G06F 21/33, G06F 21/64, H04L 9/32

(54) **ELECTRONIC DEVICE FOR PROVIDING SECURITY FUNCTION, AND OPERATING METHOD THEREOF**

(30) Priority: 07.02.2022 KR 20220015610; 11.03.2022 KR 20220030661
(71) Applicant: Samsung Electronics Co., Ltd., Suwon-si, Gyeonggi-do 16677 (KR)
(72) Inventor: KIM, Jeongil, Suwon-si, Gyeonggi-do 16677 (KR); KONG, Sunjune, Suwon-si, Gyeonggi-do 16677 (KR); KIM, Kihun, Suwon-si, Gyeonggi-do 16677 (KR); KIM, Byeonghwa, Suwon-si, Gyeonggi-do 16677 (KR); YOO, Sunghoon, Suwon-si, Gyeonggi-do 16677 (KR); YUN, Taeho, Suwon-si, Gyeonggi-do 16677 (KR); LEE, Jaeyoon, Suwon-si, Gyeonggi-do 16677 (KR)
(74) Representative: Gulde & Partner
(86) International application number: PCT/KR2022/020128
(87) International publication number: WO 2023/149648

(57) **Abstract**

A first electronic device according to an embodiment disclosed in the present document includes: a wireless communication circuit for communication with a second electronic device; a processor operatively connected to the wireless communication circuit; and a memory operatively connected to the processor, wherein the memory may store instructions that, when executed, enable the processor to: receive a certificate chain request including a challenge value from the second electronic device through the wireless communication circuit, in response to receiving a user input of requesting activation of a security function through the first electronic device or the second electronic device, wherein the security function is a function enabling the second electronic device to perform a verification process of a certificate chain when there is a user request for an operation requesting security for the second electronic device; and form the certificate chain including the challenge value and a unique ID of the first electronic device and transmit the same to the second electronic device through the wireless communication circuit.

## Description

### BACKGROUND

### 1. Field

The disclosure relates to an electronic device that provides a security function and a method of operating the same.

### 2. Description of Related Art

A wearable device (or an accessory device) (e.g., a smart watch or Bluetooth earphones) may be used by connecting to a host electronic device (e.g. a smart phone). When a wearable device is lost, someone else may obtain the wearable device and use the wearable device without permission after initializing the wearable device.

Wearable devices that support network communication may support a function that prevents device initialization and connection to other host devices by using a scheme of connecting to a network and authenticating an account. For example, by registering a wearable device to an online account and requesting a user to authenticate the account (e.g., log in) when performing device initialization or disconnection from the host device, device initialization or disconnection from a host device may be performed after changing the settings of registered device items in the account. In addition, in order to connect to a new host device after initializing the device, the online account registered before initialization may be required to be authenticated before the connection with the new host device begins.

Alternatively, a wearable device that supports a universal integrated circuit card (UICC) (e.g., a universal subscriber identity module (USIM) card or an embedded SIM (eSIM)) may support a function that prevents unauthorized use using information about the wearable device including a UICC. For example, in a wearable device that supports UICC, upon initial booting after initialization of the wearable device, a locking application program may be automatically executed to perform locking processing for the wearable device.

### [DISCLOSURE]

### [TECHNICAL PROBLEM]

In the case of wearable devices that do not support network communication or UICC, there may be no means to authenticate the user, so a function of preventing device initialization and connection to other host devices may not be provided.

Various embodiments of the present disclosure provide an electronic device and a method of operating the same capable of providing a security function of a wearable device by utilizing a scheme of verifying a certificate chain between a host device and the wearable device even when the wearable device does not support network communication or UICC or does not have its own account managed by the manufacturer of the wearable device.

### [TECHNICAL SOLUTION]

According to one embodiment of the disclosure, a first electronic device includes a wireless communication circuit that communicates with a second electronic device, a processor operatively connected to the wireless communication circuit, and a memory operatively connected to the processor, wherein the memory stores instructions which, when executed, cause the processor to receive a certificate chain request including a challenge value from the second electronic device through the wireless communication circuit when receiving a user input of requesting activation of a security function through the first electronic device or the second electronic device, wherein the security function functions to cause the second electronic device to perform a verification process of a certificate chain when there is a user request for an operation of requiring security for the second electronic device, and form the certificate chain including the challenge value and a unique ID of the first electronic device and transmit the certificate chain to the second electronic device through the wireless communication circuit.

According to another embodiment of the disclosure, a second electronic device includes a wireless communication circuit that communicates with a first electronic device, a processor operatively connected to the wireless communication circuit, and a memory operatively connected to the processor, wherein the memory stores instructions which, when executed, cause the processor to transmit a certificate chain request including a challenge value from the first electronic device through the wireless communication circuit when receiving a user input of requesting activation of a security function through the first electronic device or the second electronic device, verify validity of the certificate chain received from the first electronic device, and store the certificate chain and a unique identifier of the first electronic device included in the certificate chain in a second secure memory of the memory and activate the security function when validity of the certificate chain is verified.

### [ADVANTAGEOUS EFFECTS]

According to various embodiments of the present disclosure, it is possible to provide an electronic device and a method of operating the same capable of providing a security function of a wearable device by utilizing a scheme of verifying a certificate chain between a host device and the wearable device even when the wearable device does not support network communication or UICC or does not have its own account managed by the manufacturer of the wearable device.

In addition, various effects that are directly or indirectly understood through the present disclosure may be provided.

### BRIEF DESCRIPTION OF THE DRAWINGS

FIG. 1 is a block diagram illustrating an electronic device in a network environment according to various embodiments.
FIG. 2 is a block diagram illustrating the configurations of electronic devices according to one or more embodiments.
FIG. 3 is a flow diagram illustrating operations of electronic devices according to one or more embodiments.
FIG. 4 is a diagram illustrating a certificate chain of an electronic device according to one or more embodiments.
FIG. 5 is a flow diagram illustrating operations of electronic devices according to one or more embodiments.
FIG. 6 is a flow diagram illustrating operations of electronic devices according to one or more embodiments.
FIG. 7 is a flow diagram illustrating operations of electronic devices according to one or more embodiments.
FIG. 8 is a flow diagram illustrating the operation of a first electronic device according to one or more embodiments.
FIG. 9 is a flow diagram illustrating the operation of a second electronic device according to one or more embodiments.

With regard to description of drawings, the same or similar elements may be marked by the same or similar reference numerals.

### DETAILED DESCRIPTION

Hereinafter, various embodiments of the disclosure may be described with reference to accompanying drawings. Accordingly, those of ordinary skill in the art will recognize that modification, equivalent, and/or alternative on the various embodiments described herein can be variously made without departing from the scope and spirit of the disclosure.

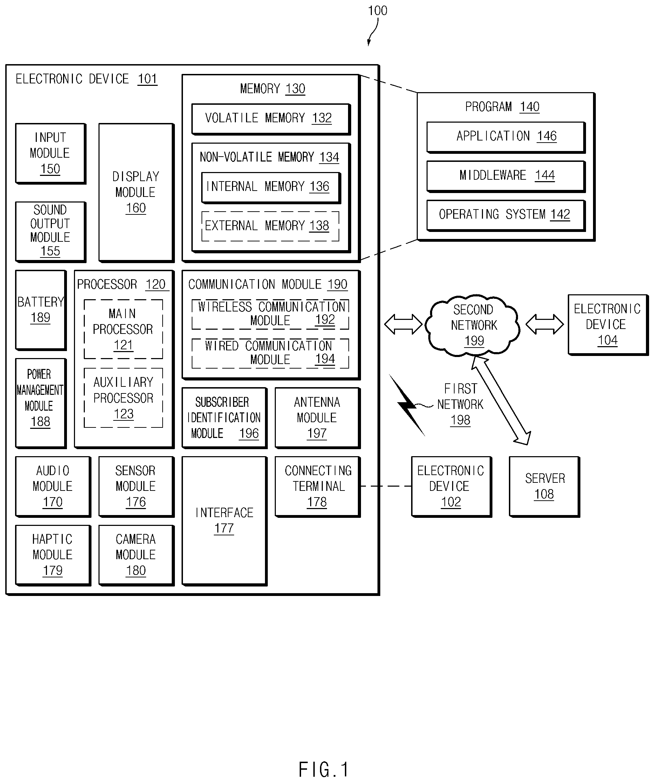

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added in the electronic device 101. In some embodiments, some of the components may be implemented as single integrated circuitry. For example, some (e.g., the sensor module 176, the camera module 180, or the antenna module 197) of the components may be implemented as embedded in the display module 160 (e.g., a display).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), and an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. When the electronic device 101 includes the main processor 121 and the auxiliary processor, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., a neural network processing device) may include a hardware structure specified for processing an artificial intelligence (AI) model. The AI model may be generated through machine learning. The learning may be performed by the electronic device 101 performing the AI, and may be performed through an additional server (e.g., the server 108). A learning algorithm may include, for example, a supervised learning algorithm, an unsupervised learning algorithm, a semi-supervised learning algorithm, or a reinforcement learning algorithm, but the disclosure is not limited thereto. The AI model may include a plurality of artificial neural network (ANN) layers. The ANN may include a deep neural network (DNN), a convolutional neural network (CNN), a recurrent neural network (RNN), a restricted boltzman machine (RBM), a deep belief network (DBN), a bidirectional recurrent deep neural network (BRDNN), a deep Q-networks or the combination of the above networks, but the disclosure is not limited thereto. The AI model may additionally or alternatively include a software structure, in addition to a hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., the electronic device 102) (e.g., speaker of headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). The communication module among these communication modules may communicate with the external electronic device 104 via the first network 198 (e.g., a short-range communication network, such as Bluetooth^{™}, wireless-fidelity (WiFi) direct, or infrared data association (IrDA)) or the second network 199 (e.g., a long-range communication network, such as a legacy cellular network, 5G network, next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network and a next-generation communication technology, for example, a new radio (NR) access technology after a 4G network. The NR access technology may support high-speed transmission for high capacity data (enhanced mobile broadband; eMBB), terminal power minimizing and multiple terminal access (massive machine type communication; mMTC), or ultra-reliable and low-latency communications (URLLC). The wireless communication module 192 may support a highfrequency band (e.g., mmWave band) to achieve, for example, a higher data rate. The wireless communication module 192 may support various technologies, for example, beamforming, massive multiple-input and multiple-output (MIMO), Full-dimensional MIMO, an array antenna, analog beam-forming, or a large-scale antenna, to secure performance in high frequency bands. The wireless communication module 192 may support various requirements defined in the electronic device 101, the external electronic device (e.g., the electronic device 104) or the network system (e.g., the second network 199). According to one embodiment, the wireless communication module 192 may support a peak data rate (e.g., 20Gbps or more) for eMBB realization, loss coverage (e.g., 164 dB or less) for mMTC realization, or U-plane latency (e.g., 0.5 ms or less, or the round trip of 1 ms or less in each of a downlink (DL) and an uplink (UL)) for URLCC realization.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas (e.g., an array antenna). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, an RFIC disposed on a first surface (e.g., a bottom surface) of the printed circuit board, or disposed adjacent to the first surface to support the specific high frequency band (e.g., mmWave band), and a plurality of antennas (e.g., an array antenna) disposed on a second surface (e.g., a top surface or a side surface) of the printed circuit board or disposed adjacent to the second surface to transmit or receive a signal having the specified high frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, when the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-latency service by using, for example, distributed computing or mobile edge computing. According to various embodiments, the external electronic device 104 may include the Internet of things (IoT). The server 108 may be an artificial server using machine learning and/or a neural network. According to an embodiment, the external electronic device 104 or the server 108 may be included in the second network 199. The electronic device 101 may be applied to an artificial intelligence service (e.g., a smart home, a smart city, a smart car, or healthcare service) based on the 5G communication technology and the IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities and some of multiple entities may be separately disposed on the other components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

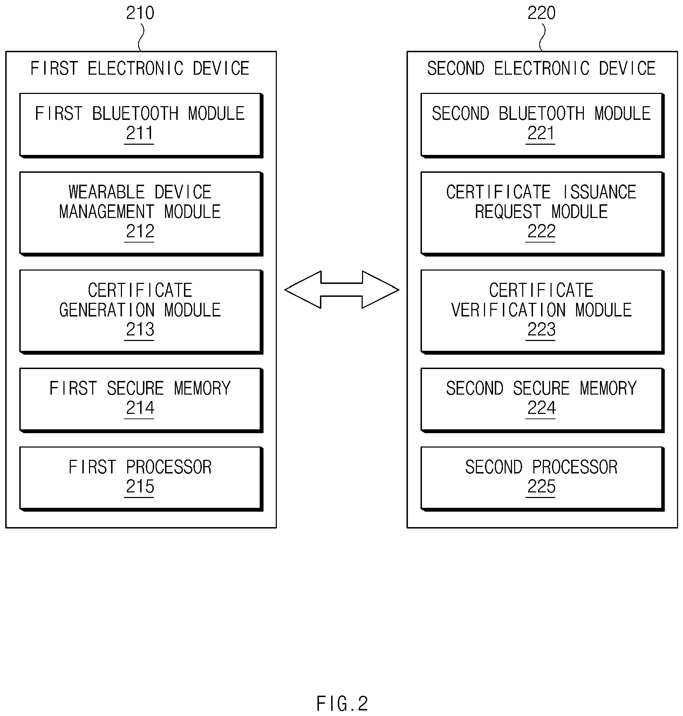

Hereinafter, an electronic device and an operation thereof according to one or more embodiments will be described with reference to FIGS. 2, 3, and 4.

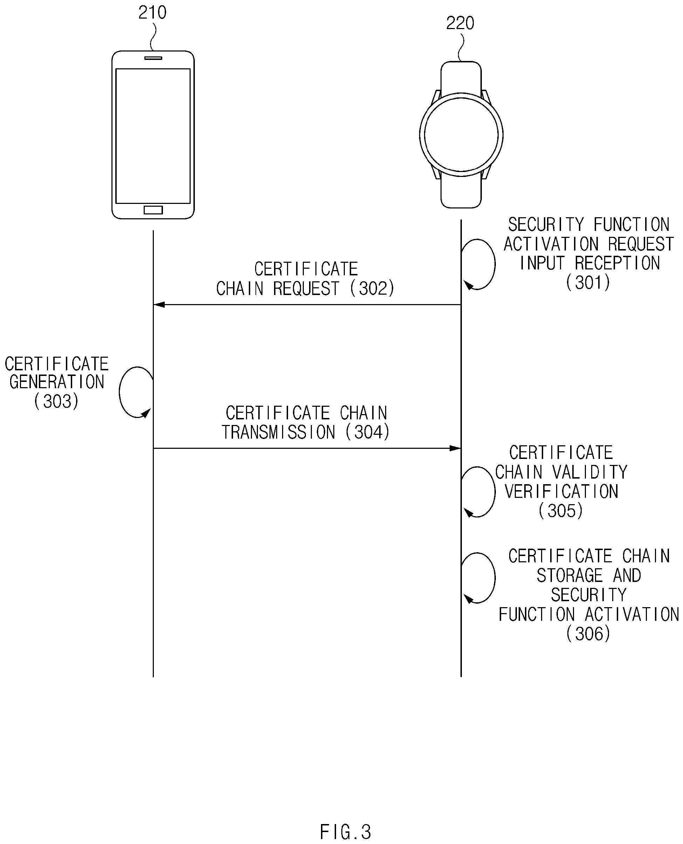

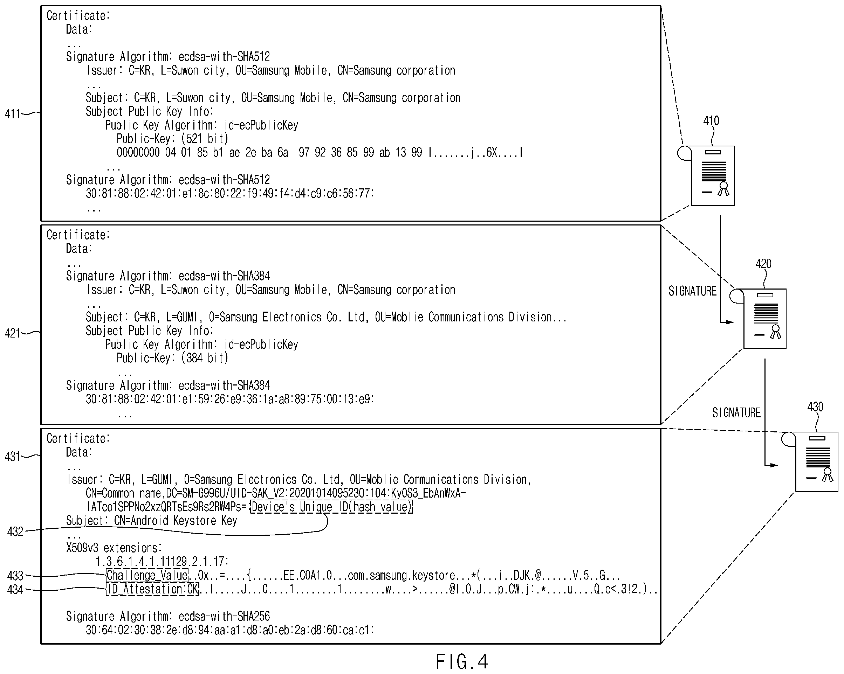

FIG. 2 is a block diagram illustrating the configurations of electronic devices according to one or more embodiments. FIG. 3 is a flow diagram illustrating operations of electronic devices according to one or more embodiments. FIG. 4 is a diagram illustrating a certificate chain of an electronic device according to one or more embodiments. Hereinafter, the operations of the electronic devices may be performed by processors (e.g., a first processor 215 and a second processor 225) of each electronic device.

Referring to FIG. 2, according to one or more embodiments, a first electronic device 210 (e.g., the electronic device 101 of FIG. 1) may include a first Bluetooth module 211, a wearable device management module 212, a certificate generation module 213, a first secure memory 214, and the first processor 215. The first processor 215 may be connected to the first Bluetooth module 211, the wearable device management module 212, the certificate generation module 213, and the first secure memory 214. Each of the first Bluetooth module 211, the wearable device management module 212, and the certificate generation module 213 may include a hardware module and/or a software module, and may be controlled or executed by the connected first processor 215.

According to one or more embodiments, the first electronic device 210, which is a host electronic device, may be one of a portable communication device (e.g., a smartphone), a computer device, a portable multimedia device, a portable medical device, a camera, or a home appliance device. The first electronic device 210 according to one or more embodiments is not limited to the above-described devices.

According to one or more embodiments, a second electronic device 220 may include a second Bluetooth module 221, a certificate issuance request module 222, a certificate verification module 223, a second secure memory 224, and the second processor 225. The second processor 225 may be connected to the second Bluetooth module 221, the certificate issuance request module 222, the certificate verification module 223, and the second secure memory 224. Each of the second Bluetooth module 221, the certificate issuance request module 222, and the certificate verification module 223 may include a hardware module and/or a software module, and may be controlled or executed by the connected second processor 225.

According to one or more embodiments, the second electronic device 220 may be a wearable device and may be one of a smart watch, Bluetooth earphones, or a head mounted display. The second electronic device 220 according to one or more embodiments is not limited to the above-described devices, and may be sufficient as an accessory electronic device of the first electronic device 210 even when it is not worn by a user.

According to one or more embodiments, the first Bluetooth module 211 may support establishment of a Bluetooth communication channel between the first electronic device 210 and an external electronic device (e.g., the second electronic device 220), and communication through the established communication channel. The first Bluetooth module 211 may operate independently from the first processor 215 and may include one or more communication processors that support wireless communication, but the embodiment is not limited thereto. According to one or more embodiments, the first Bluetooth module 211 may perform Bluetooth communication by pairing with the second electronic device 220 through a Bluetooth network.

According to one or more embodiments, the wearable device management module 212 may receive a request for a function from the second electronic device 220 and transmit the request to a module appropriate for the requested function. According to one or more embodiments, the wearable device management module 212 may include a wearable device management application that receives a certificate chain generation request from a wearable device, and the wearable device management application may receive the certificate chain generation request from the second electronic device 220 and transmit a challenge value received together with the request to the certificate generation module 213.

According to one or more embodiments, the certificate generation module 213 may include an interface unit that receives a request from the application and an operation unit that generates a certificate and a certificate chain. The operation unit may ensure the security of the certificate chain by being executed in the first secure memory 214 to form a certificate chain, and the interface unit may serve as a passage connecting the application and the operation unit.

According to one or more embodiments, the first secure memory 214 may be a trusted execution environment (TEE) or a hardware storage space that provides a security level equal to or higher than that of TEE. According to one or more embodiments, the first secure memory 214 may store a unique attestation key unique to the first electronic device 210 (hereinafter, used with the same sense as the second attestation key in various embodiments) and a unique attestation key certificate (hereinafter, used in the same sense as the second certificate in various embodiments), which is a pair certificate of the unique attestation key. The second attestation key and the second certificate may be stored in the first secure memory 214 and protected from the outside.

According to one or more embodiments, the second attestation key and the second certificate may be stored in the first secure memory 214 when manufacturing the first electronic device 210. According to one or more embodiments, the second certificate may be signed with a root key (hereinafter, used with the same sense as the first attestation key in various embodiments) in a separate hardware security module when manufacturing the first electronic device 210 and may be stored in the first secure memory 214. According to one or more embodiments, a root certificate (hereinafter, used with the same sense as the first certificate in various embodiments), which is a pair certificate of the first attestation key, may also be stored together in the first secure memory 214.

According to one or more embodiments, the unique attestation key (the second attestation key), which is the unique attestation key stored in the first electronic device 210 by the manufacturer of the first electronic device 210 when manufacturing the first electronic device 210, may be different for every electronic device of the manufacturer, and unless the first processor 215 of the first electronic device 210 is changed, the unique attestation key may remain the same within the first electronic device 210 after manufacturing the first electronic device 210.

According to one or more embodiments, the second Bluetooth module 221 may support establishment of a Bluetooth communication channel between the second electronic device 220 and the first electronic device 210, and communication through the established communication channel. And, the description of the second Bluetooth module 221 may be at least partially the same as the description of the first Bluetooth module 211.

According to one or more embodiments, when there is a request to activate/deactivate a security function and when there is a request to connect/disconnect with the host electronic device or there is a request to initialize the device, the certificate issuance request module 222 may request the issuance of a certificate chain from a host electronic device (e.g., the first electronic device 210) connected through Bluetooth communication. The certificate issuance request module 222 may transmit a certificate chain issuance request message and a challenge value together to the first electronic device 210. According to one or more embodiments, the challenge value may be a one-time value randomly generated that is unpredictable and not-repeating.

According to one or more embodiments, the certificate verification module 223 may verify the validity of the certificate chain received from the first electronic device 210. The validation process of the certificate chain will be described below.

According to one or more embodiments, a validated certificate chain may be stored in the second secure memory 224, and the second secure memory 224 may be a non-volatile memory. According to one or more embodiments, the description of the second secure memory 224 may be at least partially the same as the description of the first secure memory 214.

Hereinafter, an electronic device and an operation of the electronic device according to one or more embodiments will be described in more detail with reference to FIGS. 3 and 4. It is assumed that the security function of the second electronic device 220 is currently disabled. According to one or more embodiments, the security function may be a function that prevents unauthorized use of the second electronic device 220 and maintains the security of the second electronic device 220 in situations such as theft by performing a verification operation through a host device (e.g., the first electronic device 210) to determine whether the user who requested the corresponding request is the rightful owner of the second electronic device 220 when there is a request to initialize the software of the second electronic device 220, to disconnect the second electronic device 220 from the host device, and/or to deactivate the security function of the second electronic device 220.

Referring to FIG. 3, in operation 301, the second electronic device 220 may receive an input of requesting activation of a security function from a user. The second electronic device 220 (e.g., the second processor 225 of the second electronic device 220 in FIG. 2) may identify that there is a request to activate the security function through the user input for activating a menu of the security function.

According to one or more embodiments, in operation 302, the second electronic device 220 may request a certificate chain from the connected first electronic device 210. The second electronic device 220 may transmit a certificate chain request (e.g., a request message) to the first electronic device 210 together with a challenge value.

According to one or more embodiments, in operation 303, the first electronic device 210 (e.g., the first processor 215 of the first electronic device 210 in FIG. 2) may generate the certificate chain in response to receiving the certificate chain request from the second electronic device 220.

Hereinafter, an embodiment of an operation of generating a certificate chain of the first electronic device 210 will be described with reference to FIG. 4. FIG. 4 illustrates a first certificate 410, a second certificate 420, a third certificate 430, an example 411 of the details of the first certificate 410, an example 421 of the details of the second certificate 420, and an example 431 of the details of the third certificate 430.

Referring to FIG. 4, the certificate chain may include three certificates 410, 420 and 430. According to the embodiment of FIG. 4, the second certificate 420 may be a certificate which is stored in the secure memory (e.g., the first secure memory 214 of FIG. 2) of the first electronic device 210 when the certificate is generated by the first electronic device 210. According to the embodiment, the second certificate 420 may be a unique attestation key certificate that is a pair certificate of the unique attestation key (second attestation key) of the first electronic device 210. According to one or more embodiments, the second certificate may be signed with a root key

(first attestation key) in a separate hardware security module (HSM) when manufacturing the first electronic device 210 and may be stored in the first electronic device 210.

According to one or more embodiments, the first certificate 410 may be a root certificate that is a pair certificate of the root key with which the second certificate 420 is signed, and may be a certificate stored in the secure memory (e.g., the first secure memory 214 of FIG. 2) of the first electronic device 210 when the certificate is generated by the first electronic device 210.

According to one or more embodiments, in response to receiving the certificate chain request from the second electronic device 220, the first electronic device 210 may generate an application key (hereinafter, used with the same meaning as the third attestation key in various embodiments) and an application certificate (hereinafter, used with the same meaning as the third certificate in various embodiments) that is a pair certificate of the application key.

According to one or more embodiments, the first electronic device 210 may include a challenge value 433 received from the second electronic device 220 in the third certificate 430, and the third certificate 430 may be signed with the second attestation key of the second certificate 420.

According to one or more embodiments, when generating the third certificate 430, the first electronic device 210 may include a unique identifier (ID) 432 of the first electronic device 210 in the third certificate 430. In addition, in this case, the first electronic device 210 may additionally perform an operation of determining whether the value of the unique identifier 432 of the first electronic device 210 is valid, and may include, in the third certificate 430, the value 434 determined to be valid for the unique identifier 432.

According to one or more embodiments, the first electronic device 210 may complete the generation of the certificate chain by completing the signature on the third certificate 430. In this case, the generated certificate chain may include the public key of the first certificate 410 and the public key of the second certificate 420.

Referring to FIG. 3 again, in operation 304, the first electronic device 210 may transmit the generated certificate chain to the second electronic device 220.

In operation 305, the second electronic device 220 may verify the validity of the received certificate chain. According to one or more embodiments, the second electronic device 220 may verify the validity of the certificate chain by determining whether the signature of the corresponding certificate is valid with the public key of the issuer indicated on the certificate of the received certificate chain.

According to one or more embodiments, the second electronic device 220 may verify whether the signature of the second certificate 420 is valid with the public key of the first certificate 410, which is the issuer indicated in the second certificate 420 of the received certificate chain. According to one or more embodiments, the second electronic device 220 may verify whether the signature of the third certificate 430 is valid with the public key of the second certificate 420, which is the issuer indicated in the third certificate 430 of the received certificate chain.

According to one or more embodiments, as the validation of the third certificate 430 is completed, the second electronic device 220 may determine whether the challenge value 433 included in the third certificate 430 is the same as the challenge value which the second electronic device 220 transmits to the first electronic device 210.

According to one or more embodiments, when the unique identifier 432 of the first electronic device is included in the third certificate 430 and the identifier of a trusted device (e.g., a device with a connection history, and the like) is stored in the memory of the second electronic device 220, the second electronic device 220 may identify the unique identifier 432 included in the third certificate 430 to determine whether the certificate chain is transmitted from a trusted device.

According to one or more embodiments, as the validity of the certificate chain is verified, in operation 306, the second electronic device 220 may store the certificate chain in the secure memory (e.g., the second secure memory 224 in FIG. 2) and may activate the security function of the second electronic device 220. According to one or more embodiments, when receiving a security function deactivation request and/or a device initialization request from the user, the second electronic device 220 may store, in the secure memory, the certificate chain of which the validity is certified for use in the verification process.

In addition, according to one or more embodiments, the second electronic device 220 may register the unique identifier 432 of the first electronic device 210 included in the third certificate 430 in the second electronic device 220 as a trusted device. When the unique identifier 432 of the first electronic device 210 is already registered in the second electronic device 220 as a trusted device, the registration operation of the device identifier may be omitted.

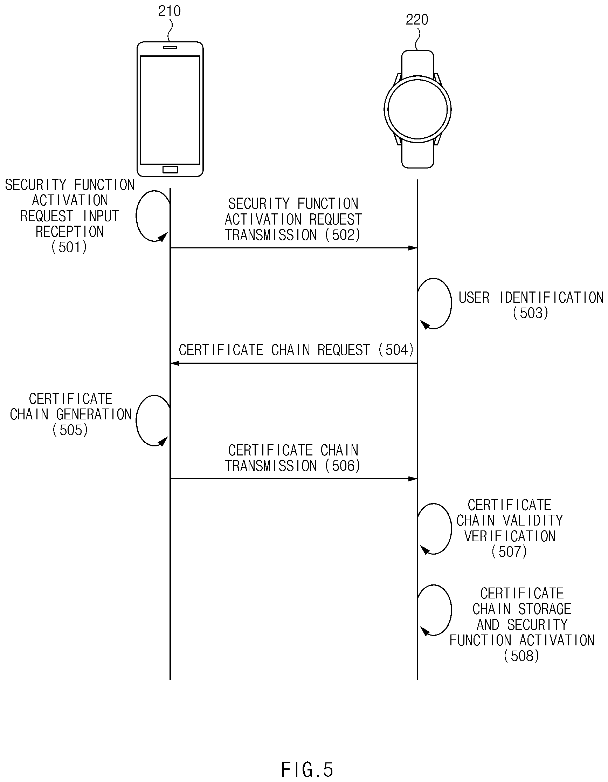

Hereinafter, when an input of requesting activation of a security function is received at the first electronic device 210 according to one or more embodiments, the operations of electronic devices will be described with reference to FIG. 5. It is assumed that the security function of the second electronic device 220 is currently disabled. Descriptions of the same configuration as the previously described embodiment may be omitted.

FIG. 5 is a flow diagram illustrating operations of electronic devices according to one or more embodiments.

Referring to FIG. 5, in operation 501, the first electronic device 210 (e.g., the first processor 215 of the first electronic device 210 in FIG. 2) may receive an input of requesting activation of a security function of the second electronic device 220 from a user. According to one or more embodiments, the first electronic device 210 may identify that there is a request to activate the security function through the user input for activating a menu of the security function

In operation 502, the first electronic device 210 may transmit, to the connected second electronic device 220, which is the target of a security function activation request, the fact that the activation of the security function activation is requested. For example, the first electronic device 210 may transmit a security function activation request message to the second electronic device 220.

In operation 503, the second electronic device 220 (e.g., the second processor 225 of the second electronic device 220 in FIG. 2) may receive the user's confirmation of the security function activation request. According to one or more embodiments, the second electronic device 220 may display the security function activation request of the second electronic device 220 on the display device of the second electronic device 220, and may receive a confirmation (approval) input of the user for the request.

In operation 504, the second electronic device 220 may request a certificate chain from the connected first electronic device 210. The second electronic device 220 may transmit a certificate chain request to the first electronic device 210 together with a challenge value.

In operation 505, the first electronic device 210 may generate the certificate chain in response to receiving the certificate chain request from the second electronic device 220. According to one or more embodiments, the operation of the first electronic device 210 for forming a certificate chain may be the same as the content previously described with reference to FIGS. 3 and 4. According to one or more embodiments, the first electronic device 210 may generate an application certificate (third certificate) and an attestation key (third attestation key), and sign the application certificate with a unique attestation key (second attestation key) stored in the secure memory, thereby forming a certificate chain including a root certificate (first certificate), a unique attestation key certificate (second certificate), and the application certificate (third certificate). According to one or more embodiments, the application certificate (third certificate) may include a challenge value received from the second electronic device 220 and a unique identifier of the first electronic device 210.

In operation 505, the first electronic device 210 may transmit the generated certificate chain to the second electronic device 220.

In operation 507, the second electronic device 220 may verify the validity of the received certificate chain.

According to one or more embodiments, the operation of the second electronic device 220 for verifying the validity of the certificate chain may be the same as the content previously described with reference to FIGS. 3 and 4. According to one or more embodiments, the second electronic device 220 may verify the validity of the second certificate by using the public key included in the first certificate and may verify the validity of the third certificate by using the public key included in the second certificate. After completing the verification of the certificate validity, the second electronic device 220 may identify the challenge value included in the third certificate and the unique identifier of the second electronic device 220.

According to one or more embodiments, as the validity of the certificate chain is verified, in operation 506, the second electronic device 220 may store the certificate chain in the secure memory (e.g., the second secure memory 224 in FIG. 2) and may activate the security function of the second electronic device 220. According to one or more embodiments, when receiving a security function deactivation request and/or a device initialization request from the user, the second electronic device 220 may store, in the secure memory, the certificate chain of which the validity is certified for use in the verification process.

In addition, according to one or more embodiments, the second electronic device 220 may register the unique identifier 432 of the first electronic device 210 included in the third certificate 430 in the second electronic device 220 as a trusted device. When the unique identifier of the first electronic device 210 is already registered in the second electronic device 220 as a trusted device, the registration operation of the device identifier may be omitted.

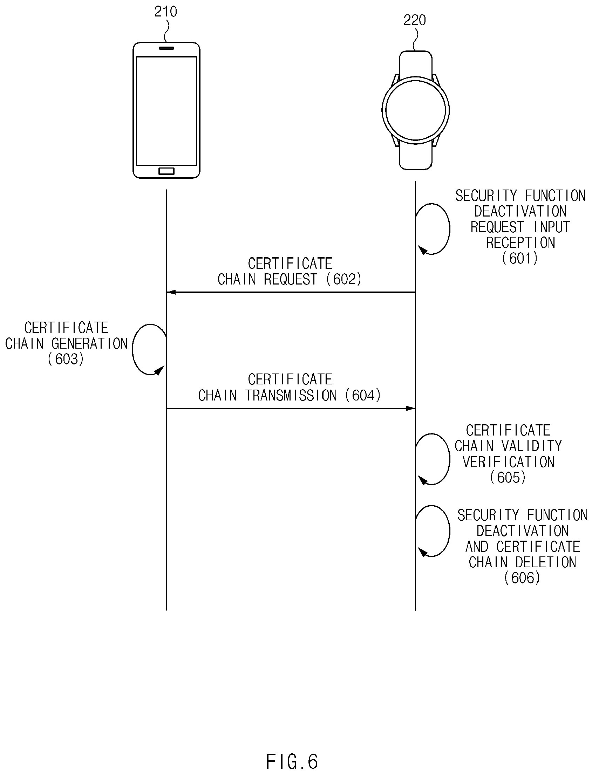

Hereinafter, when a security function deactivation request input is received while the security function of the second electronic device 220 according to one or more embodiments is activated, the operations of electronic devices will be described with reference to FIG. 6. Descriptions of the same configuration as the previously described embodiment may be omitted.

FIG. 6 is a flow diagram illustrating operations of electronic devices according to one or more embodiments.

Referring to FIG. 6, in operation 601, the second electronic device 220 (e.g., the second processor 225 of the second electronic device 220 in FIG. 2) may receive an input of requesting deactivation of a security function of the second electronic device 220 from a user. In FIG. 6, the second electronic device 220 is illustrated as receiving a request of deactivating the security function of the second electronic device 220. However, as in FIG. 5 described above, the first electronic device 210 may receive a request of deactivating the security function of the second electronic device 220 and transmit the request to the second electronic device 220.

In operation 602, the second electronic device 220 may request a certificate chain from the connected first electronic device 210. The second electronic device 220 may transmit a certificate chain request to the first electronic device 210 together with a challenge value.

According to one or more embodiments, in operation 603, the first electronic device 210 (e.g., the first processor 215 of the first electronic device 210 in FIG. 2) may generate the certificate chain in response to receiving the certificate chain request from the second electronic device 220. According to one or more embodiments, the operation of the first electronic device 210 for forming a certificate chain may be the same as the content previously described with reference to FIGS. 3 and 4. According to one or more embodiments, the first electronic device 210 may generate an application certificate (third certificate) and an attestation key (third attestation key), and sign the application certificate with a unique attestation key (second attestation key) stored in the secure memory, thereby forming a certificate chain including a root certificate (first certificate), a unique attestation key certificate (second certificate), and the application certificate (third certificate). According to one or more embodiments, the application certificate (third certificate) may include a challenge value received from the second electronic device 220 and a unique identifier of the first electronic device 210.

In operation 604, the first electronic device 210 may transmit the generated certificate chain to the second electronic device 220.

In operation 605, the second electronic device 220 may verify the validity of the received certificate chain. According to one or more embodiments, the operation of the second electronic device 220 for verifying the validity of the certificate chain may be the same as the content previously described with reference to FIGS. 3 and 4. According to one or more embodiments, the second electronic device 220 may verify the validity of the second certificate by using the public key included in the first certificate and may verify the validity of the third certificate by using the public key included in the second certificate.

According to one or more embodiments, after completing the verification of the certificate validity, the second electronic device 220 may determine whether the challenge value included in the third certificate is the same as the challenge value transmitted by the second electronic device 220 to the first electronic device 210.

In addition, according to one or more embodiments, the second electronic device 220 may determine whether the unique identifier of the first electronic device 210 included in the third certificate is identical with an identifier stored in the secure memory (e.g., the second secure memory 224 in FIG. 2) of the second electronic device 220. According to one or more embodiments, the identifier of at least one electronic device as a trusted device may be stored in the secure memory of the second electronic device 220.

According to one or more embodiments, the identifier stored in the secure memory of the second electronic device 220 may be stored in the operation of activating the security function of the second electronic device 220. According to one or more embodiments, in the operation of activating the security function of the second electronic device 220, the second electronic device 220 may store, in the secure memory, an identifier included in the certificate chain received from the first electronic device 210 and verified for validity. According to one or more embodiments, by determining whether the identifier of the electronic device included in the certificate chain received in the process of deactivating the security function is identical with the identifier of the electronic device included in the certificate chain received in the process of activating the security function, the second electronic device 220 may identify that the second electronic device 220 that desires to deactivate the security function is connected to the same electronic device as the first electronic device 210 that was connected at the time of activating the security function.

According to one or more embodiments, by identifying the validity of the certificate chain, the identity of the challenge value, and the identity of the electronic device identifier, the second electronic device 220 may identify that the user of the second electronic device 220 who currently desires to deactivate the security function is identical with the user of the second electronic device 220 at the time of activating the security function (not only a substantially identical user, but also a user with legitimate authority even when the user is not substantially the same).

To the contrary, for example, when the second electronic device 220 belongs to a user without legitimate authority due to theft, loss, and the like while the security function of the second electronic device 220 is activated and an unauthorized user attempts to deactivate the security function of the second electronic device 220, the second electronic device 220 may receive a certificate chain from another electronic device (not the first electronic device 210) and determine that the electronic device identifier included in the certificate chain is different from the electronic device identifier stored in the second electronic device 220. Accordingly, the second electronic device 220 may determine that the received certificate chain is invalid and determine that the user of the second electronic device 220 does not have legitimate authority.

When it is verified in operation 605 that the certificate chain received from the first electronic device 210 is valid, in operation 606, the second electronic device 220 may deactivate the security function and delete the certificate chain stored in the secure memory. According to one or more embodiments, the owner of the second electronic device 220 may voluntarily deactivate the security function of the second electronic device 220 before transferring ownership of the second electronic device 220, so that the second electronic device 220 may be initialized and to enable the new legitimate owner to set the security function of the second electronic device 220 in relation to his/her electronic device.

According to one or more embodiments, in FIG. 6, when the security function deactivation request input is received while the security function of the second electronic device 220 is activated is described. However, even in the case where a request input for disconnecting the second electronic device 220 from the first electronic device 210 is received while the security function of the second electronic device 220 is activated, the same process as in FIG. 6 may be performed. For example, when a request input for disconnecting the second electronic device 220 from the first electronic device 210 is received, the second electronic device 220 may request a certificate chain from the first electronic device 210. Then, the first electronic device 210 may generate a certificate chain and transmit the certificate chain to the second electronic device 220, and the second electronic device 220 may verify the validity of the certificate chain and then, release the connection with the first electronic device 210 only when verifying the validity of the certification chain.

In addition, according to one or more embodiments, in FIG. 6, a case where the security function deactivation request input is received while the security function of the second electronic device 220 is activated is described, but the second electronic device 220 may perform the same process as in FIG. 6 even when an input of requesting the second electronic device 220 to connect to the host device is received while the security function of the second electronic device 220 is activated. For example, when the input of requesting the second electronic device 220 to connect to the host device is received, the second electronic device 220 may request a certificate chain from the host device, and the host device may generate the certificate chain and transmit the certificate chain to the second electronic device 220. In addition, after verifying the validity of the certificate chain, the second electronic device 220 may compare the device identifier stored in the second electronic device 220 with the device identifier in the certificate chain and may disallow connection with the host device when the device identifier stored in the second electronic device 220 is different from the device identifier in the certificate chain. When the host device is a device that does not provide a certificate chain function, the second electronic device 220 may not receive a response to the certificate chain request and thus may also disallow the connection with the host device.

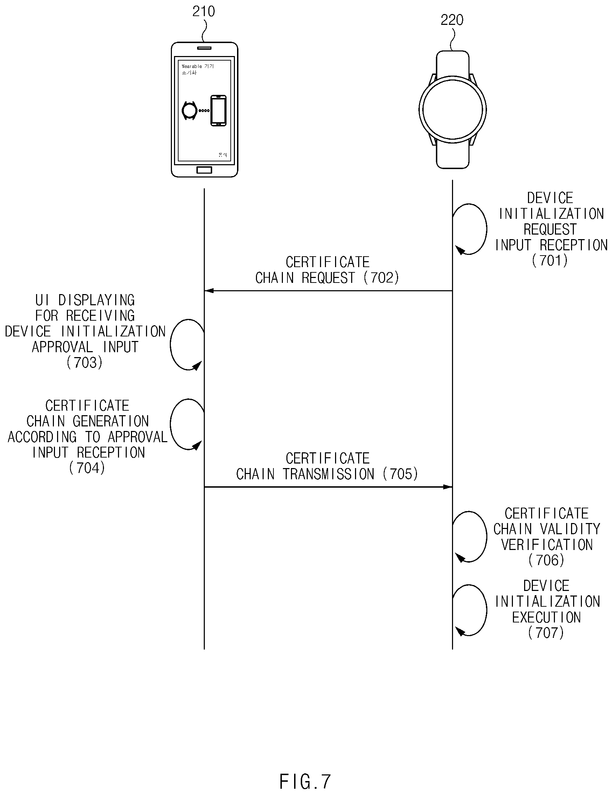

Hereinafter, when a device initialization request input is received while the security function of the second electronic device 220 according to one or more embodiments is activated, the operations of electronic devices will be described with reference to FIG. 7.

FIG. 7 is a flow diagram illustrating operations of electronic devices according to one or more embodiments.

Referring to FIG. 7, in operation 701, the second electronic device 220 (e.g., the second processor 225 of the second electronic device 220 in FIG. 2) may receive a device initialization request input of the second electronic device 220 from the user. According to one or more embodiments, device initialization may mean resetting the software to the factory default state by deleting all information stored in the device after shipment from the factory, and may also be referred to as factory initialization, hard reset, or master reset.

In operation 702, the second electronic device 220 may request a certificate chain from the connected first electronic device 210. The second electronic device 220 may transmit a certificate chain request to the first electronic device 210 together with a challenge value.

In operation 703, when the first electronic device 210 (e.g., the first processor 215 of the first electronic device 210 in FIG. 2) receives a certificate chain request from the second electronic device 220, the first electronic device 210 may display a user interface (UI) for receiving a device initialization consent input from the second electronic device 220 on the display device of the first electronic device 210.

In operation 704, the first electronic device 210 may generate a certificate chain upon receiving the device initialization consent input from the second electronic device 220 through the UI. According to one or more embodiments, the operation of the first electronic device 210 for forming a certificate chain may be the same as the content previously described with reference to FIGS. 3 and 4. According to one or more embodiments, the first electronic device 210 may generate an application certificate (third certificate) and an attestation key (third attestation key), and sign the application certificate with a unique attestation key (second attestation key) stored in the secure memory, thereby forming a certificate chain including a root certificate (first certificate), a unique attestation key certificate (second certificate), and the application certificate (third certificate). According to one or more embodiments, the application certificate (third certificate) may include a challenge value received from the second electronic device 220 and a unique identifier of the first electronic device 210.

In operation 705, the first electronic device 210 may transmit the generated certificate chain to the second electronic device 220.

In operation 706, the second electronic device 220 may verify the validity of the received certificate chain. According to one or more embodiments, the operation of the second electronic device 220 for verifying the validity of the certificate chain may be the same as the content previously described with reference to FIGS. 3 and 4. According to one or more embodiments, the second electronic device 220 may verify the validity of the second certificate by using the public key included in the first certificate and may verify the validity of the third certificate by using the public key included in the second certificate.

According to one or more embodiments, after completing the verification of the certificate validity, the second electronic device 220 may determine whether the challenge value included in the third certificate is the same as the challenge value transmitted by the second electronic device 220 to the first electronic device 210.

In addition, according to one or more embodiments, the second electronic device 220 may determine whether the unique identifier of the first electronic device 210 included in the third certificate is identical with an identifier stored in the secure memory (e.g., the second secure memory 224 in FIG. 2) of the second electronic device 220. According to one or more embodiments, the identifier of at least one electronic device as a trusted device may be stored in the secure memory of the second electronic device 220

According to one or more embodiments, the identifier stored in the secure memory of the second electronic device 220 may be stored in the operation of activating the security function of the second electronic device 220. According to one or more embodiments, in the operation of activating the security function of the second electronic device 220, the second electronic device 220 may store, in the secure memory, an identifier included in the certificate chain received from the first electronic device 210 and verified for validity. According to one or more embodiments, by determining whether the identifier of the electronic device included in the certificate chain received in the process of deactivating the security function is identical with the identifier of the electronic device included in the certificate chain received in the process of activating the security function, the second electronic device 220 may identify that the second electronic device 220 that desires to deactivate the security function is connected to the same electronic device as the first electronic device 210 that was connected at the time of activating the security function.

According to one or more embodiments, by identifying the validity of the certificate chain, the identity of the challenge value, and the identity of the electronic device identifier, the second electronic device 220 may identify that the user of the second electronic device 220 who currently desires to perform device initialization of the second electronic device 220 is identical with the user of the second electronic device 220 at the time of activating the security function (not only a substantially identical user, but also a user with legitimate authority even when the user is not substantially the same).

To the contrary, for example, when the second electronic device 220 belongs to a user without legitimate authority due to theft, loss, and the like while the security function of the second electronic device 220 is activated and an unauthorized user attempts to perform the device initialization of the second electronic device 220, the second electronic device 220 may receive a certificate chain from another electronic device (not the first electronic device 210) and determine that the electronic device identifier included in the certificate chain is different from the electronic device identifier stored in the second electronic device 220. Accordingly, the second electronic device 220 may determine that the received certificate chain is invalid and determine that the current user of the second electronic device 220 does not have legitimate authority.

When it is verified in operation 706 that the certificate chain received from the first electronic device 210 is valid, in operation 707, the second electronic device 220 may perform device initialization of the second electronic device 220.

According to one or more embodiments, the owner of the second electronic device 220 may perform device initialization of the second electronic device 220 according to the process of FIG. 7 before voluntarily transferring ownership of the second electronic device 220.

To the contrary, when the unauthorized owner of the second electronic device 220 proceeds with device initialization, because it may not receive the certificate chain when the connection with the first electronic device 210 registered in the second electronic device 220 is lost, the certificate verification process may not be performed, which prevents the initialization function from being properly executed. In addition, even in an abnormal case where the certificate is transmitted from a device other than the registered first electronic device 210, the second electronic device 220 may determine that the certificate is invalid through the certificate verification process, so the second electronic device 220 may prevent a device initialization command from being executed as it is determined that the certificate is invalid.

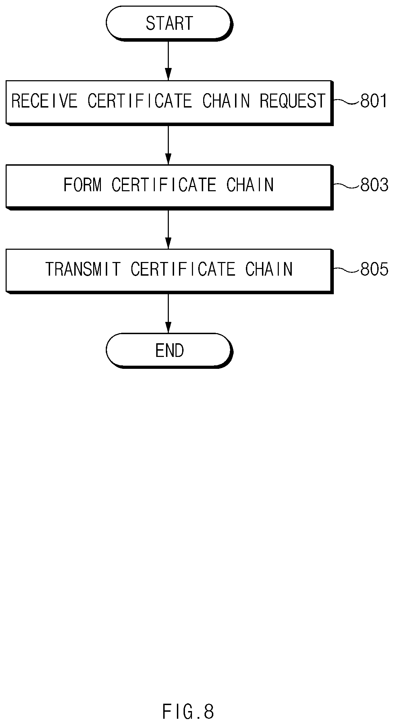

Hereinafter, the operation of a first electronic device (e.g., the first electronic device 210 in FIG. 2) according to one or more embodiments will be described with reference to FIG. 8.

FIG. 8 is a flow diagram illustrating the operation of a first electronic device according to one or more embodiments. The operations of FIG. 8 may be performed by a first processor (e.g., the first processor 215 in FIG. 2) of the first electronic device.

Referring to FIG. 8, the first electronic device or the second electronic device (e.g., the second electronic device 220 in FIG. 2) may receive an input of requesting activation of a security function from a user. Upon identifying the input of requesting activation of the security function, the second processor (e.g., the second processor 225 in FIG. 2) of the second electronic device may transmit a certificate chain request to the first processor of the first electronic device.

According to one or more embodiments, in operation 801, the first processor of the first electronic device may receive the certificate chain request from the second electronic device. The first processor of the first electronic device may receive a certificate chain request (e.g., a request message) and a challenge value together.

According to one or more embodiments, in operation 803, the first processor of the first electronic device may generate a certificate chain upon receiving the certificate chain request from the second electronic device. The scheme of forming a certificate chain by the first electronic device may be the same as the content previously described with reference to FIG. 4.

In operation 805, the first processor of the first electronic device may transmit the generated certificate chain to the second electronic device.

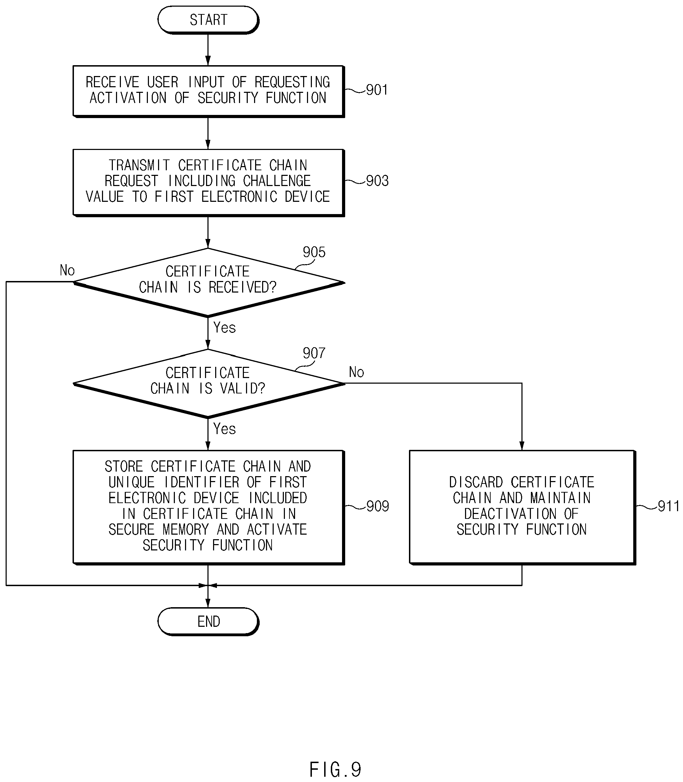

Hereinafter, the operation of a second electronic device (e.g., the second electronic device 220 in FIG. 2) according to one or more embodiments will be described with reference to FIG. 9. Descriptions of the same configuration as the previously described embodiment may be omitted.

FIG. 9 is a flow diagram illustrating the operation of a second electronic device according to one or more embodiments. The operations of FIG. 9 may be performed by a second processor (e.g., the second processor 225 in FIG. 2) of the second electronic device.

Referring to FIG. 9, in operation 901, the second processor of the second electronic device may receive a user input of requesting activation of the security function. The second processor of the second electronic device may receive the user input of requesting activation of the security function directly through the second electronic device or may receive it through the first electronic device.

According to one or more embodiments, in operation 903, the second processor of the second electronic device may transmit a certificate chain request to the first processor of the first electronic device when identifying the input of requesting activation of the security function. The second processor of the second electronic device may transmit a certificate chain request (e.g., a request message) and a challenge value together.

According to one or more embodiments, in operation 905, the second processor of the second electronic device may determine whether a certificate chain is received. The second processor of the second electronic device may terminate the process when determining that the certificate chain is not received. The second processor of the second electronic device may proceed to operation 907 when determining that the certificate chain is received.

According to one or more embodiments, in operation 907, the second processor of the second electronic device may verify the validity of the received certificate chain. According to one or more embodiments, the scheme of verifying the validity of the certificate chain by the second processor of the second electronic device may be the same as that previously described with reference to FIG. 3.

According to one or more embodiments, when the second processor of the second electronic device determines that the certificate chain is valid, in operation 909, the second processor of the second electronic device may store the certificate chain and the unique identifier of the first electronic device in a secure memory (e.g., the second secure memory 224 in FIG. 2) as a trusted device and activate the security function of the second electronic device.

According to one or more embodiments, when the second processor of the second electronic device determines that the certificate chain is invalid, in operation 911, the second processor of the second electronic device may discard the certificate chain and maintain the deactivation state of the security function of the second electronic device.

A wearable device according to one or more embodiments may store the certificate chain and unique identifier of a host device while activating the security function. When there is a request to initialize the wearable device, disconnect from the host device, and/or deactivate the security function of the wearable device, unauthorized use of the wearable device may be prevented and the security of the wearable device may be maintained in situations such as theft, and the like by allowing the wearable device to perform the verification process in terms of whether the user who transmits the corresponding request is the rightful owner of the second electronic device 220 and whether the wearable device is connected to the same host device as the host device that performs the verification process.

According to one or more embodiments, when a certificate chain request is received from a wearable device in response to a user's request for activation/deactivation of a security function, device connection/disconnection, and device initialization, the host device may use the unique attestation key and unique attestation key certificate stored in the host device at the time of manufacturing the host device to generate the certificate chain, so that the security function to the wearable device may be provided.

According to one or more embodiments, even though the wearable device is a device that does not support a network communication function and UICC or a device that does not support an account authentication scheme, when an operation using a high security level is requested, the wearable device and the host device may be requested to perform a process of verifying the certificate chain, so that the security function of determining whether a requested operation is valid may be provided. As a result, even when the wearable device is lost, others may be prevented from intentionally initializing the device, and loss of connection status and unauthorized use of connection with another host device may be prevented.

According to one or more embodiments, a first electronic device may include a wireless communication circuit configured to communicate with a second electronic device, a processor operatively connected to the wireless communication circuit, and a memory operatively connected to the processor, wherein the memory stores instructions which, when executed, cause the processor to receive a certificate chain request including a challenge value from the second electronic device through the wireless communication circuit when receiving a user input of requesting activation of a security function through the first electronic device or the second electronic device, wherein the security function functions to cause the second electronic device to perform a verification process of the certificate chain when there is a user request for an operation of requiring security for the second electronic device, and form the certificate chain including the challenge value and a unique ID of the first electronic device and transmit the certificate chain to the second electronic device through the wireless communication circuit.

According to one or more embodiments, the memory may include a first secure memory, wherein the first secure memory stores a second attestation key corresponding to a unique attestation key of the first electronic device and second certificate corresponding to a pair certificate of the second attestation key.

According to one or more embodiments, the second certificate may be signed with a first attestation key corresponding to a root key in a manufacturing process of the first electronic device and stored in the first secure memory.

According to one or more embodiments, the memory may store instructions which, when executed, cause the processor to form a third attestation key and a third certificate corresponding to a pair certificate of the third attestation key when receiving the certificate chain request, include the challenge value and the unique identifier of the first electronic device in the third certificate, and form the certificate chain by signing the third certificate with the second attestation key.

According to one or more embodiments, the operation of requesting the security may include at least one of the activation of the security function, deactivation of the security function, a connection with a host device, a disconnection from the host device, and software initialization.

According to one or more embodiments, the certificate chain may include a first certificate corresponding to a pair certificate of the first attestation key, a first public key of the first certificate, the second certificate, a second public key of the second certificate, and the third certificate.

According to one or more embodiments, the verification process of the certificate chain may include verifying validity of the second certificate with the first public key and verifying validity of the third certificate with the second public key.

According to one or more embodiments, a second electronic device may include a wireless communication circuit configured to communicate with a first electronic device, a processor operatively connected to the wireless communication circuit, and a memory operatively connected to the processor, wherein the memory stores instructions which, when executed, cause the processor to transmit a certificate chain request including a challenge value through the wireless communication circuit when receiving a user input of requesting activation of a security function through the first electronic device or the second electronic device, verify validity of a certificate chain received from the first electronic device, and store the certificate chain and a unique identifier of the first electronic device included in the certificate chain in a second secure memory of the memory and activate the security function when validity of the certificate chain is verified.

According to one or more embodiments, the certificate chain may include a second certificate signed with a first attestation key that is a root key in a process of manufacturing the first electronic device, a first certificate that is a pair certificate of the first attestation key, and a third certificate signed with a second attestation key that is a pair attestation key of the second certificate and corresponds to a unique attestation key of the first electronic device.

According to one or more embodiments, the certificate chain may include a first public key of the first certificate, and a second public key of the second certificate.

According to one or more embodiments, the memory may store instructions which, when executed, cause the processor to verify validity of the second certificate with the first public key and verify validity of the third certificate with the second public key to verify the validity of the certificate chain.

According to one or more embodiments, the third certificate may include the challenge value and the unique identifier of the first electronic device.

According to one or more embodiments, the memory may store instructions which, when executed, cause the processor to determine whether the challenge value included in the third certificate and the challenge value included in the certificate chain request are same to verify the validity of the certificate chain.

According to one or more embodiments, the memory may store instructions which, when executed, cause the processor to transmit a certificate chain request to a host device when there is a user request for an operation of requiring security while the security function is activated.

According to one or more embodiments, the memory may store instructions which, when executed, cause the processor to verify the validity of a certificate included in the certificate chain received from the host device with a public key included in the certificate chain received from the host device, to verify the validity of the certificate chain received from the host device.

According to one or more embodiments, the memory may store instructions which, when executed, cause the processor to determine whether a challenge value included in the certificate chain received from the host device and a challenge value included in the certificate chain request to the host device are the same to verify the validity of the certificate chain received from the host device.

According to one or more embodiments, the memory may store instructions which, when executed, cause the processor to determine whether the electronic device identifier included in the certificate chain received from the host device and the unique identifier of the first electronic device stored in the second secure memory are same in order to verify the validity of the certificate chain received from the host device.

According to one or more embodiments, the memory may store instructions which, when executed, cause the processor to determine that the certificate chain received from the host device is valid when it is determined that an identifier of the electronic device and the unique identifier of the first electronic device are the same.

According to one or more embodiments, the memory may store instructions which, when executed, cause the processor to perform an operation of requesting the security when it determined that the certificate chain received from the host device is valid.

According to one or more embodiments, the operation of requesting security may include at least one of the activation of the security function, deactivation of the security function, a connection with the host device, a disconnection from the host device, and software initialization of the second electronic device.

## Claims

1. A first electronic device comprising:
a wireless communication circuit configured to communicate with a second electronic device;
a processor operatively connected to the wireless communication circuit; and
a memory operatively connected to the processor,
wherein the memory stores instructions which, when executed, cause the processor to:
receive a certificate chain request including a challenge value from the second electronic device through the wireless communication circuit when receiving a user input of requesting activation of a security function through the first electronic device or the second electronic device, wherein the security function functions to cause the second electronic device to perform a verification process of a certificate chain when there is a user request for an operation of requiring security for the second electronic device; and
form the certificate chain including the challenge value and a unique ID of the first electronic device and transmit the certificate chain to the second electronic device through the wireless communication circuit.

2. The first electronic device of claim 1, Wherein the memory includes a first secure memory, wherein the first secure memory stores a second attestation key corresponding to a unique attestation key of the first electronic device and second certificate corresponding to a pair certificate of the second attestation key.

3. The first electronic device of claim 2, wherein the second certificate is signed with a first attestation key corresponding to a root key in a manufacturing process of the first electronic device and stored in the first secure memory.

4. The first electronic device of claim 3, wherein the memory stores instructions which, when executed, cause the processor to:
form a third attestation key and a third certificate corresponding to a pair certificate of the third attestation key when receiving the certificate chain request,
include the challenge value and the unique ID of the first electronic device in the third certificate, and
form the certificate chain by signing the third certificate with the second attestation key.

5. The first electronic device of claim 4, wherein the operation of requesting the security includes at least one of the activation of the security function, deactivation of the security function, a connection with a host device, a disconnection from the host device, and software initialization.

6. The first electronic device of claim 4, wherein the certificate chain includes a first certificate corresponding to a pair certificate of the first attestation key, a first public key of the first certificate, the second certificate, a second public key of the second certificate, and the third certificate.

7. The first electronic device of claim 6, wherein the verification process of the certificate chain includes verifying validity of the second certificate with the first public key and verifying validity of the third certificate with the second public key.

8. A second electronic device comprising:
a wireless communication circuit configured to communicate with a first electronic device;
a processor operatively connected to the wireless communication circuit; and
a memory operatively connected to the processor,
wherein the memory stores instructions which, when executed, cause the processor to:
transmit a certificate chain request including a challenge value from the first electronic device through the wireless communication circuit when receiving a user input of requesting activation of a security function through the first electronic device or the second electronic device,
verify validity of a certificate chain received from the first electronic device, and
store the certificate chain and a unique identifier of the first electronic device included in the certificate chain in a second secure memory of the memory and activate the security function when the validity of the certificate chain is verified.

9. The second electronic device of claim 8, wherein the certificate chain includes a second certificate signed with a first attestation key that is a root key in a process of manufacturing the first electronic device, a first certificate that is a pair certificate of the first attestation key, and a third certificate signed with a second attestation key that is a pair attestation key of the second certificate and corresponds to a unique attestation key of the first electronic device.

10. The second electronic device of claim 9, wherein the certificate chain includes a first public key of the first certificate, and a second public key of the second certificate, and
the third certificate includes the challenge value and the unique identifier of the first electronic device.

11. The second electronic device of claim 10, wherein the memory stores instructions which, when executed, cause the processor to:
verify validity of the second certificate with the first public key and verify validity of the third certificate with the second public key to verify the validity of the certificate chain, or
determine whether the challenge value included in the third certificate and the challenge value included in the certificate chain request are same to verify the validity of the certificate chain.

12. The second electronic device of claim 8, wherein the memory stores instructions which, when executed, cause the processor to:
transmit the certificate chain request to a host device when there is a user request for an operation of requiring security while the security function is activated.

13. The second electronic device of claim 12, wherein the memory stores instructions which, when executed, cause the processor to:
verify validity of a certificate included in the certificate chain received from the host device with a public key included in the certificate chain received from the host device, to verify the validity of the certificate chain received from the host device;
determine whether a challenge value included in the certificate chain received from the host device and a challenge value included in the certificate chain request to the host device are the same to verify the validity of the certificate chain received from the host device; or
determine whether an electronic device identifier included in the certificate chain received from the host device and the unique identifier of the first electronic device stored in the second secure memory are same in order to verify the validity of the certificate chain received from the host device.

14. The second electronic device of claim 13, wherein the memory stores instructions which, when executed, cause the processor to:
determine that the certificate chain received from the host device is valid when it is determined that the identifier of the electronic device and the unique identifier of the first electronic device are same; and
perform an operation of requesting the security when it is determined that the certificate chain received from the host device is valid.

15. The second electronic device of claim 14, wherein the operation of requesting the security includes at least one of the activation of the security function, deactivation of the security function, a connection with the host device, a disconnection from the host device, and software initialization of the second electronic device.
